# EUROPEAN PATENT APPLICATION

(11) **EP 3 167 840 A1**
(43) Date of publication of application: **17.05.2017**
(21) Application number: 16020300.6
(22) Date of filing: 10.08.2016
(51) Int. Cl.: A61C 8/00

(54) **SCREW IMPLANT WITH AN APICAL CUTTING THREAD AND CORONAL PROP FOR COMPRESSION OR CONDENSING OF THE CORONAL BONE**

(30) Priority: 10.11.2015 DE 202015007713 U
(71) Applicant: Ihde, Stefan, Dr., 85315 Vrba/Tudorovici (ME)
(72) Inventor: Ihde, Stefan, Dr., 85315 Vrba/Tudorovici (ME)
(74) Representative: Janickaite, Liucija

(57) **Abstract**

A screw implant for use in bone is described. It features a known apical thread (4) and a partly threadless core-shaft (1). Below the abutment head (3) the implants features a circular prop (2) which compresses and tightens the bone, which has been cut by the apical thread (4). Thereby remodelling for repair is prevented or at least reduced and this increases secondary stability during the actual process of integration.

## Description

The invention refers to a screw implant according to claims 1 and subsequent. In literature we find simple basal screw implants. These implants provide an apical thread for insertion into the cortical distant to the crest of the bone, for example in DE 202011104513 U1. There a screw implant with an abutment head is shown and the abutment head sows notches for connecting prosthetics. The endosseous part of the shaft has a constant diameter and at its end a cutting thread is attached.

Furthermore dental implants have been described, which provide besides the apical thread also a coronal thread for catching the crestal cortical, e.g. in US patent application 2013/0216976 A1.
And finally combination implants for oral use are known, featuring an apical cutting thread and a long conical compression thread, e.g. as shown in the Russian Patent No. 131604.

One of the disadvantages of basal (screw) implants with coronal thread according to US patent application 2013/0216976 A1 it, that the coronal threads do not run synchronous in the slots created by the apical threads during their insertion: due to the fact that in the spongious bone areas almost no resistance is provided, the implant is pressed during insertion always a little bit into the bone and the slows in both corticals (11, 12) do not run synchronous any more, although during fabrication of the implant synchronous threads are created on the long axis of the implants. Hence the coronal thread usually cuts a second slot into the crestal cortical (11) and this leads to stronger re-modelling. The reomodeeling results in a softening of the bone and often unwanted vertical bone loss is accompanied to this. Another disadvantage of these designs is, that implants with such a design can hardly be placed into fresh extraction sockets, because debris may get cought in the undercuts of the threads. This by itself may lead to bone resorption stemming from remodelling in the crestal cortical.

Although implants according to the US patent application 2013/0216976 A1 show a high primary stability a disadvantage is connected to their insertion: due to the fact that a threadless portion is given above the apical thread, even large cantilever forces are transmitted directly from the mastication to the cortical into which the implant is screwed in through the apical thread. The sharp coronal threads damage the crestal cortical thereby more than they contribute to the stabilisation.

The herewith described invention was made in order to eliminate the explained disadvantages through a new implant design.

This task is solved by a screw implant according to claim 1 and subsequent, with preferred variants and advantageous deatails being disclosed in these dependent and independent claims.

As per the invention instead of a coronal thread a cylindrical thicker part of the shaft is part of the coronal part of the shaft and this prop is in some distance to the abutment. This cylindrical thicker part of the shaft acts astonishingly like a prop, and it contributes in an astonishing manner to a compression of the coronal bone, which was previously damaged by the treads of the implants during insertion. The prop creates a plastic deformation of the cortical bone thereby repairing and closing the bone.
This also leads to a compression of the crestal cortical bone, and this leads to a good traction (force transmission) and small defects in the cortical are repaired by the slipping of layers of bone.

It is of special advantage that thereby the crestal cortical is available much better for resisting against lateral forces. On the crestal side of the thickening, - towards the abutment, a small lever is created through the prop. Opposite to this small lever a much longer lever towards the apical develops. Thereby also in such cases when the apical (2nd) cortical ist thin, on such thin corticals only minimal amounts of the masticatory forces are acting. Without such thicker areas at the shaft in extraction sockets no lateral resistance would be given und as a result only one long lever is given.

Depending on the situation, of the implant is placed in healed bone areas with high, medium or low mineralisation or even in fresh extraction sockets, the implant with an adequate diameter of the thickened shaft area must be chosen.

In the area of extraction sockets the thicker part of the shaft helps either directly to gain higher primary stability, - i.e. in cases where the thicker area compresses or at least touches the wall of the socket - , or it at least reduces the distance between the wall of the extraction socket and the implant. This results in a reduced size of the gap which has to beclosed by the growing woven bone and thereby the danger of infection is reduced dramatically.

On the outer circumference of the prop circular grooves or narrow circular micro-threads may be positioned and the increases the size of the surface of the prop. Hence the surface which is available for adhesion of the blood cloth is increased. Nevertheless this enlargened surface does not increase the chance of infection, in the way sand-blasting or etching would increase it.

The invention is explained more with the help of drawings.
Figure 1 shows a screw implant as per the invention in one preferred embodiment.
Figure 2 shows a different embodiment of the screw implant as explained in this invention, however with a lengthy thickened part in the shape of an egg, but without macro-relief.

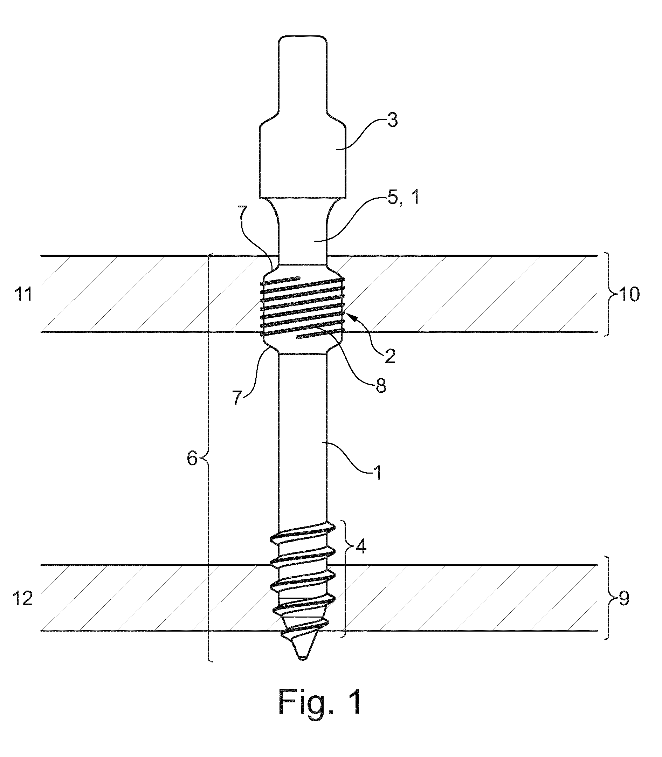

Figure 1 shows a first, preferred embodiment if the screw implant. It consists of an implant shaft (1), an apical cutting thread (4), an abutment-head (3) for cementing or screwing on of the prosthetics.

As per this invention of the coronal side of the shaft, in the endosseous crea (6) if the shaft (1) a circular thicker part (2) is given, and this thicker part has some distance to the abutment head (3). The thicker area (2) is positioned after insertion of the implant completely in the cortical of the crest (11), and it acts astonishingly like a prop, which contributes to the repair of the crestal cortical (which was damaged through the penetrating threads of the implant) through plastic deformation of the cortical. Due to this immediately after implant placement compression oh the cortical (11) is exerted and this leads to a good load transmission and smaller damages within the structure of that cortical are closed through slipping of the bone. It is a special advantage that thanks to this solution the crestal cortical is available to resist against lateral forces.

In a preferred embodiment the coronal prop (2) may feature on ist outer surface a small micro-grooves (8) or a narrow micro-thread, however with these threads or grooves being shallow and they do not reach to the diameter of the core of the implant (1). The advantage of the two embodiments mentioned in this section is the creation of perfectly oriented space for the depositing of newly formed osteons, that after repair of the bone. The groves and threads (8) are running in the principal direction of osteon-formation, they do not block them. In addition due to the soft elevations in the groves (8) exet some lateral pressure and this increases at points and at lines the mineralisation and stability of the cortical (11). The outer circumference of the prop (2) may also be fully polished and without any such structures.

In another preferred embodiment of the invention, at the lower portion of the thickening (2) is an oblique face (7) is attached, which leads to a smooth transition between the unthreaded thicker section of the implant shaft (1) and the thickening (2). Oh the upper portion of the thickened part (2) towards the neck (5), the thickening along such a slanted surface (7) can lead up to the neck (5).

In Figure 1, the annular thickened portion (2) is having a cylindrical outer contour. The thickened portion (2), can have an axial length of for example 1.5 - 4.5 mm.

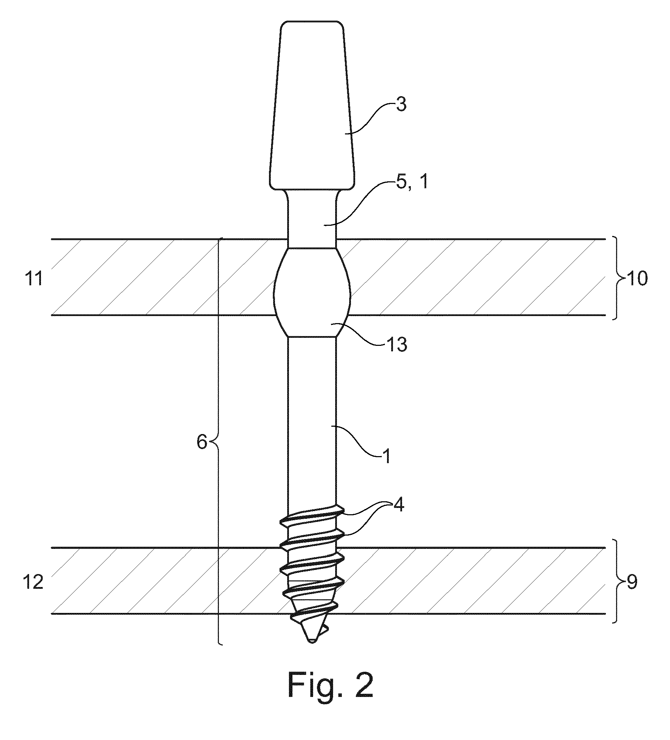

In a likewise extremely effective embodiment of the present invention in accordance with Figure 2, the thickening (13) is egg-shaped and its surface has either a gently-undulating macro-relief or the portion is completely smooth, as is exemplified in Fig. 2. The diameter of the thickened portion (2, 13) is preferably at least 5% larger than the diameter of the main shaft (1), above the cutting thread (4).

Between said annular thickening (2, 13) and the abutment head (3) is a cylindrical transmucosal section (neck), (5), which has an axial length of at least 1.5 mm and at least 1.9 mm in diameter.

In another embodiment, implants with different sizes of thickenings are produced. Depending on how the crestal bione is mineralized, an implant with an adapted thickness of the prop can be chosen, and that allows easy insertion. If the implants are inserted directly into fresh extraction sites, a prop will be chosen as thick as possible, thereby greatly reducing the distance between the implant stem or the prop and the alveolar wall.

### List of references to the drawings

- 1: (Threadless) shaft of the implant, core shaft.
- 2: Coronal thickening (Prop)
- 3: Abutment head
- 4: Apicales cutting thread
- 5: Trans-mucosal area of the implant (neck)
- 6: Endosseous part of the implant
- 7: Bevel below the thicker part
- 8: Circular grooves/ microthreads
- 9: Apikal, endosseous region of the implant
- 10: Coronal endosseous region of the implant
- 11: Cortical are the crest
- 12: Apical cortical
- 13: Egg-shape thickening on the crestal part of the shaft.

## Claims

1. Screw implant with a shaft (1), with an abutment head (3) for cementing of for screwing on prosthetic work-pieces, and with an apical cutting thread (4), **characterized in**, having below the abutment head (4) in with a distance to this head a circular prop (2, 13) in the area of the shaft (1) which is designed for enosseous placement.

2. Screw implant according to claim 1, **characterized by** having a circular prop (2) and that this prop features a cylindrical outer shape.

3. Screw implant according to claim 1, **characterized by**, the thicker part (13) has a lengthy egg-shape and that the outer diameter is larger than the core diameter of the shaft of the implant. (1).

4. Screw implant according to one of the claims 1 or 3, **characterized by**, the circular prop featuring a length of 1.5 - 4.5 mm.

5. Screw implant according to one of the claims 1 or 4, **characterized by**, the circular prop (2, 13) having an at least 5 % larger diameter than the endossous part of the shaft (1).

6. Set of screw implants according to one of the claims 1 or 5, **characterized by**, the prop having different diameters of the thickened parts (2, 3).

7. Set of screw implants according to one of the claims 1 or 6, **characterized by**, a prop (13) having circular micro-grooves or micro-threads (8), which are so shallow, that their deepest point does not reach to the diameter of the shaft (1) of the implants.

8. A screw implant according to any one of claims 1 to 7, **characterized in that** the surface of the thickened portion (2, 13) is smooth or polished and has no surface structure or surface enlargement.

9. A screw implant according to any one of claims 1 to 8, **characterized in that** beneath the thickened portion (2) is mounted an oblique transition area between the thickened portion and endosteal shaft (1).

10. A screw implant according to any one of claims 1 to 9, **characterized in that** between the ring-shaped thickening (2, 13) and the abutment head (3) a cylindrical trans-mucosal section (5) is given and the dimensions of that sections are at least 1.5 mm in (vertical) length and 1.9 mm diameter.
